# EUROPEAN PATENT APPLICATION

(11) **EP 1 420 321 A2**
(43) Date of publication of application: **19.05.2004**
(21) Application number: 03257205.9
(22) Date of filing: 14.11.2003
(51) Int. Cl.: G05D 16/10

(54) **Dual proportional pressure reducing valve**

(30) Priority: 15.11.2002 US 426932 P
(71) Applicant: HydraForce, Inc., Lincolnshire, Illinois 60069 (US)
(72) Inventor: Chen, Jianping, Gurnee, Illinois 60031 (US)
(74) Representative: Sutcliffe, Nicholas Robert

(57) **Abstract**

A dual proportional pressure control valve (10) can include a cage (16), a spool (18), and an electromagnetic proportional actuator (20) having a pair of coils (24,25). The control valve (10) can deliver a stable secondary pressure to one of two different load ports from a primary pressure source. Which load port receives the secondary pressure can be dependent upon which coil of the activator is energized. Since the spool (18) is driven directly by the electromagnet (20) to control its sliding position, its secondary pressure can correspond to the strength of the electromagnet-energizing current. Secondary pressure feedback from the load port can act on an area defined by lands of the spool (18), which can have different diameters, or on the area formed by an axial hole in each end of the spool, thereby making the secondary pressure more controllable against disturbances. The valve (10) can eliminate the need for a long, narrow internal hole in the spool and also provide an actuator chamber subjected only to a tank pressure by adding an additional tank port in the cage.

## Description

### CROSS-REFERENCE TO RELATED PATENT APPLICATIONS

This patent application claims the benefit of priority to U.S. Provisional Application No. 60/426,932, filed November 15, 2002, entitled "Dual Proportional Pressure Reducing Valve," which is incorporated in its entirety herein by this reference.

### FIELD OF THE INVENTION

This invention relates to dual proportional pressure control valves used to drive spool valves in hydraulic systems.

### BACKGROUND OF THE INVENTION

A proportional pressure control valve usually has a primary pressure port, a load port, and a tank port. The spool of the control valve is driven to a predetermined position by a magnetic force. With the spool in such position, an annular groove on the spool connects the primary pressure port and the load port, thereby providing a secondary pressure to a demanding device. In applications that drive a 3-position spool valve, a proportional pressure control valve is often mounted on each end of the 3-position spool valve to drive the spool in different directions toward different predetermined locations. This arrangement requires two primary pressure paths and ports, two proportional actuators and two cavities.

### SUMMARY OF THE INVENTION

The invention can provide a pressure control valve for controlling two pressure load paths. The pressure control valve can include a housing defining a single primary input pressure path, a first load path, and a second load path. The housing can have a cavity therein. A spool, which is slidably disposed in the cavity of the housing, and a dual proportional actuator including a movable plunger, can be provided. The plunger can be in operative engagement with the spool. The actuator can be selectively operable to move the spool via the plunger in a first direction or a second direction and to thereby dispose the spool in a neutral position wherein the first and second load paths are blocked, a first control position wherein the first load path is open and the second load path is blocked, and a second position wherein the second load path is open and the first load path is blocked.
This arrangement can confer a cost-savings advantage over many prior art valves.

In an aspect of the invention, a dual proportional actuator can be provided that can drive the spool in opposite directions. A single spring can be used to keep the plunger and the spool in their neutral positions when the actuator is not energized and to return them to their neutral position after a drive current has disappeared, regardless of their location and previous direction of movement. An orifice can be provided in the spool to permit oil or other fluid to dampen movement of the spool.

In yet another aspect of the invention, a pair of tank ports can be provided to eliminate the need for a long, narrow internal hole in the spool. The tank ports can expose the actuator chamber only to the tank pressure.

In a further aspect of the invention, spool lands of different diameters can define an area. The lands can be exposed to a secondary pressure that generates a feedback force which acts against a drive force, thereby making the pressure at the load port more stable against disturbances. The control lands of the spool can be arranged such that the load ports are isolated from the primary port and connected to the tank ports when no magnetic force is present. When a magnetic force is present, one load port can be connected to the primary pressure port while the other load port is still connected to the tank port.

In still a further aspect of the invention, an area defined by an axial hole in the spool can be connected to the secondary pressure, thereby generating a feedback force against the magnetic force due to the presence of a sliding pin. A stop pin can absorb the force acting on the sliding pin. The stop pin can be mounted in a cage such that it absorbs the force acting on the sliding pin, which is generated in an amount substantially equal to the secondary pressure multiplied by the sliding pin area. A slot can be added to the spool to accommodate the stop pin, thereby permitting the spool to move freely.

These and other features of the present invention will become apparent to one of ordinary skill in the art upon reading the detailed description, in conjunction with the accompanying drawings.

### BRIEF DESCRIPTION OF THE DRAWINGS

FIGURE 1 is a sectional view of an embodiment of a valve according to the present invention.

FIG. 2 is a sectional view of another embodiment of a valve according to the present invention.

FIG. 3 is a perspective view of a spool useful in connection with the valve of FIG. 2.

### DETAILED DESCRIPTION OF

### PREFERRED EMBODIMENTS OF THE INVENTION

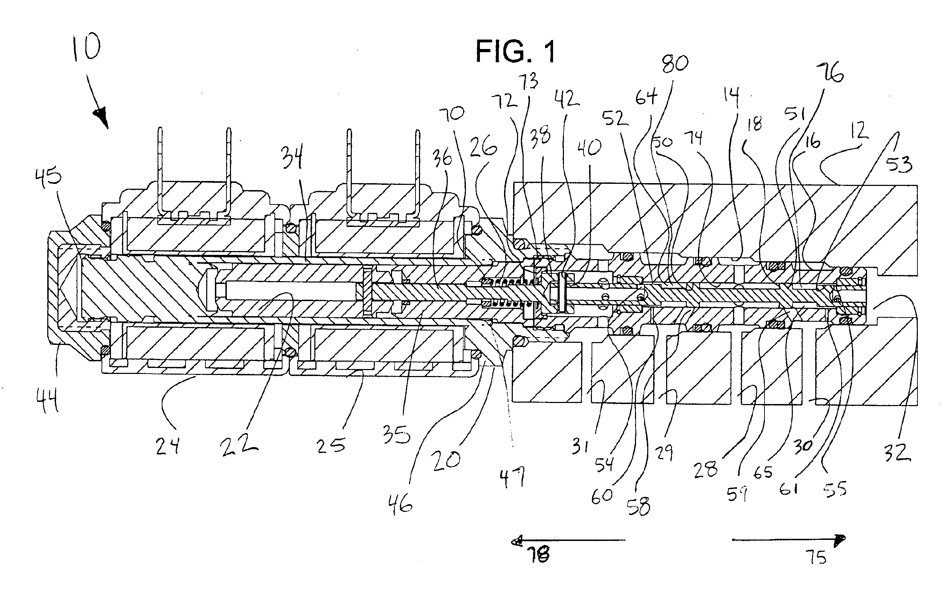

Referring to FIG. 1, an embodiment of a pressure control valve for controlling two pressure load paths **10** according to the present invention can comprise a housing **12** having a cavity **14** therein, a hollow cage **16** disposed in the cavity **14**, a spool **18** slidably disposed in the cage **16**, an electromagnet actuator **20** having an armature or plunger **22** and first and second solenoid coils **24, 25**, and a spring **26** for biasing the spool **18** and the plunger **22** to a neutral position. The housing **12** has a primary pressure port **28**, first and second load ports **29, 30**, and first and second tank ports **31, 32** communicating with the cavity **14**. The valve **10** can have other known components, such as, seals, for example, and can be constructed according to known techniques.

The actuator **20** can include a hollow tube **34** with the first and second solenoid coils **24, 25** wound therearound and the plunger **22** slidably arranged therein, a pole piece **35** anchored within the tube **34**, and a push pin **36** attached to and extending from the plunger **22** and engaging the spool **18.** The push pin **36** can include a yoke portion **38** which can receive an end portion **40** of the spool **18** therebetween. The push pin **36** and the spool **18** can be journaled together via a connector **42** for allowing the spool **18** and the push pin **36** to move together in tandem.

The actuator **20** can include a cap **44** threadedly engaged with one end **45** of the tube **34** and an adaptor **46** secured to the other end **47** thereof. The adaptor **46** can be mounted to the housing **12** and to the cage **16** such that they are disposed in fixed relationship with each other.

The spool **18** can have a first pair of inner lands **50, 51** and a second pair of outer lands **52, 53**. The inner lands **50, 51** can have a different diameter than the outer lands **52, 53**. The spool **18** can have first and second holes **54, 55.**

The cage **16** can include first and second regulating ports 58, 59 and first and second orifices **60, 61**, which respectively communicate with first and second interior chambers **64, 65** defined therein.

The spring **26** can be disposed between a retainer ring **70** mounted to the push pin **36** and a spacer **72** mounted to an end **73** of the cage **16**.

When both coils **24**, **25** of the electromagnet actuator **20** are in a de-energized state, the spool **18** and the plunger **22** are kept in their neutral positions by the spring **26**. The first and second load ports **29, 30** are respectively connected to the first and second tank ports **31, 32** by the holes **54, 55**. The inner spool lands **50, 51** define a chamber **74** therebetween and can isolate the primary pressure port **28.** The primary pressure port **28** is in communication with a primary input pressure path. The first load port **29** and the first tank port **31** are in communication with each other via a first discharge path. The second load port **30** and the second tank port **32** are in communication with each other via a second discharge path.

When a drive current is applied to the second coil **25** of the actuator **20**, an electromagnetic force is created, which can drive the plunger **22** to overcome the force of the spring **26** and push the spool **18** in a first direction **75,** to the right as shown in FIG. 1. The distance that the spool moves is proportional to the drive current. After moving a predetermined distance, the spool **18** opens the second regulating port **59** and simultaneously closes the second hole **55**, thereby resulting in a secondary pressure at the second load port **30** and a blocking of communication between the second load port **30** and the second tank port **32.** The second load port **30** and the primary pressure port **28** are in communication with each other via a second pressure load path. The second discharge path is closed and will not allow fluid to flow therethrough.

The secondary pressure can act on an area **76** defined by the second inner land **51** and the second outer land **53** through the second orifice **61**, which stabilizes the secondary pressure at the second load port **30.** On the other end of the spool **18**, since the first hole **54** thereof remains open, the first load port **29** is still connected to the first tank port **31** through the first chamber **64.** The first discharge path remains open, thereby allowing fluid to flow therethrough.

Once the drive current is removed from the second coil **25**, the spring **26** can act to urge the spool **18** and the plunger **22** back to their neutral position.

When a drive current is applied to the first coil **24**, an electromagnetic force is created, which drives the plunger **22** to overcome the force of the spring **26** and drag the spool **18** in a second direction **78**, to the left as shown in FIG. 1, which is opposite to the first direction **75**. The distance that the spool **18** moves is proportional to the drive current. After moving a predetermined distance, the spool **18** opens the first regulating port **58** and simultaneously closes the first hole **54** of the spool, thereby resulting in a secondary pressure at the first load port **29** and a blocking of communication between the first load port **29** and the first tank port **31.** The first load port **29** and the primary pressure port **28** are in communication with each other via a first pressure load path. The first discharge path is closed and will not allow fluid to flow therethrough.

This secondary pressure can act on an area **80** defined by the first outer land **52** and the first inner land **50** through the first orifice **60** of the cage, which stabilizes the secondary pressure at the first load port **29.** On the other end of the spool **18**, since the second hole **55** of the spool remains open, the second load port **30** is still connected to the second tank port **32** through the second chamber **65**. The second discharge path remains open, thereby allowing fluid to flow therethrough.

Once the drive current is removed from the first coil **24**, the spring **26** can act to urge the spool **18** and the plunger **22** back to their neutral position.

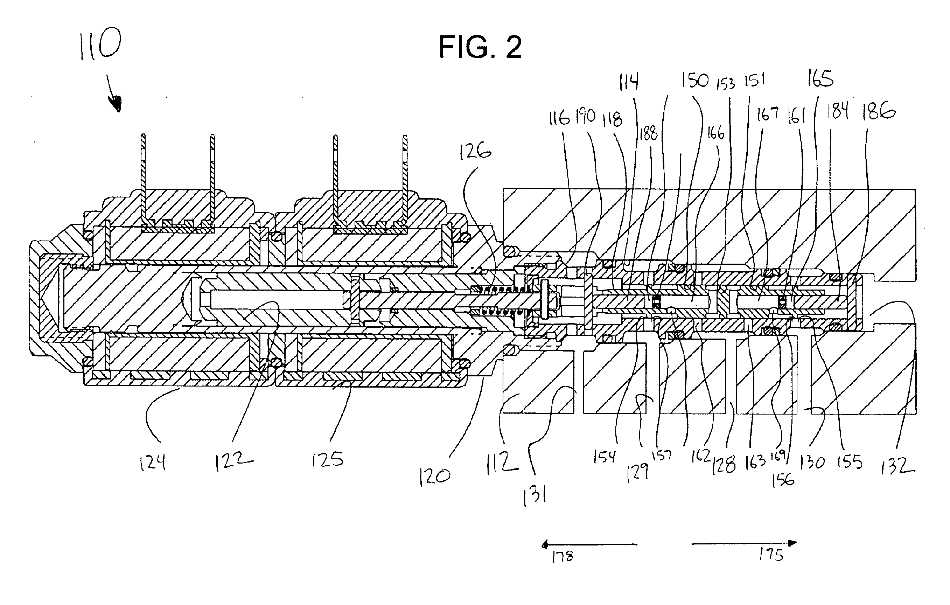

Referring to FIG. 2, another embodiment of a pressure control valve for controlling two pressure load paths **110** according to the present invention is shown. The valve **110** can comprise a housing **112** having a cavity **114** therein, a hollow cage **116** disposed in the cavity **114**, a spool **118** slidably disposed in the cage **116**, an electromagne actuator **120** having an armature or plunger **122** and first and second solenoid coils **124, 125**, and a spring **126** for biasing the spool **118** and the plunger **122** to a neutral position The housing **112** has a primary pressure port 128, first and second load ports **129, 130,** and first and second tank ports **131, 132** communicating with the cavity **114.** The valve **110** can have other known components, such as, seals, for example, and can be constructed according to known techniques.

When the electromagnet actuator **120** is in a de-energized state, the spool **118** and the plunger **122** are kept in their neutral positions by the spring **126**. The first and second load ports **129, 130** are respectively connected to the first and second tank ports **131, 132** by first and second partial ports **154, 155.** Inner spool lands **150, 151** can isolate the primary pressure port **128**.

When a drive current is applied to the second coil **125**, an electromagnetic force is created that drives the plunger **122** to overcome the force of the spring **126** and to push the spool **118** in a first direction **175,** to the right as shown in FIG. 2. The distance that the spool **118** moves is proportional to the drive current. After moving a predetermined distance, the spool **118** simultaneously opens a regulating port **163** of the cage, opens a third partial port **156**, and closes the second partial port **155**, thereby forming a secondary pressure. An intermediate land **153** of the spool **118** can act to isolate the secondary pressure.

The secondary pressure can be transferred to the second load port **130** through an axial hole **167,** a radial hole **169,** and the third partial port **156**. The communication between the second load port **130** and the second tank port **132** is blocked at the same time by virtue of the second partial port **155** being closed. The secondary pressure can also act on an area defined by the axial hole **167** in the spool **118** and on the area of a sliding pin **184** inside the spool **118,** which generates two opposite forces - a feedback force and a pushing force. The feedback force acts on the spool **118** against the magnetic force to stabilize the secondary pressure at the second load port **130.** The pushing force acts on the sliding pin **184** to push the sliding pin **184** against a stop pin **186**. On the other end of the spool, the first partial port **154** enlarges in response to the movement of the spool **118** to the right. Thus, the first load port **129** can maintain communication with the first tank port **131**. Because of the movement of the sliding pin **184** inside the spool **118,** the oil or other fluid flowing in or out of the chamber **165** through the orifice **161** dampens the movement of the spool **118**.

When the drive current is applied to the first coil **124**, an electromagnetic force is created that drives the plunger **122** to overcome the force of the spring **126** and to drag th spool **118** in a second direction **178,** to the left as shown in FIG. 2, which is opposite to th first direction **174**. The distance that the spool **118** moves is proportional to the drive current. After moving a predetermined distance, the spool **118** simultaneously opens the regulating port **162**, opens a fourth partial port **157**, and closes the first partial port **154,** thereby forming a secondary pressure. The intermediate land **153** of the spool **118** can act to isolate the secondary pressure. The secondary pressure can be transferred to the first load port **129** through an axial hole **166**, a radial hole **168**, and the partial port **157**. The communication between the first load port **129** and the first tank port **131** can be blocked at the same time by virtue of the first partial port **154** being closed. The secondary pressure can also act on an area defined by an axial hole **166** in the spool **118** and on the area of a sliding pin **188** inside the spool **118**, which generates two opposite forces - a feedback force and a pushing force. The feedback force acts on the spool **118** against the magnetic force to stabilize the secondary pressure at the first load port **129.** The pushing force acts on the sliding pin **188** to push the sliding pin **188** against a stop pin **190.** On the other end of the spool, the second partial port **155** enlarges in response to the movement of the spool **118** to the left. Thus, the second load port **130** can maintain communication with the second tank port **132.** Because of the sliding pin **188** moving inside the spool **118,** the oil or other fluid flowing in or out of the chamber **164** through the orifice **160** dampens the movement of the spool **118.**

The valve **110** of FIG. 2 can be similar in other respects to the valve **10** of FIG. 1 shown and described herein.

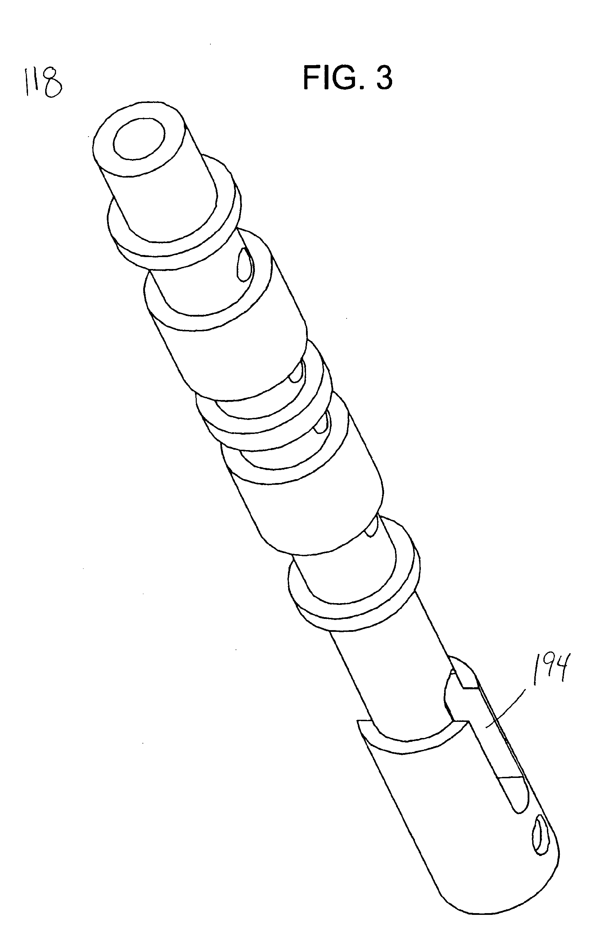

Referring to FIG. 3, the spool **118** can include at least one slot **194** to accommodate the stop pin.

All references, including publications, patent applications, and patents, cited herein are hereby incorporated by reference

The use of the terms "a" and "an" and "the" and similar referents in the context of describing the invention is to be construed to cover both the singular and the plural, unless otherwise indicated herein or clearly contradicted by context. All methods described herein can be performed in any suitable order unless otherwise indicated herein or otherwise clearly contradicted by context. The use of any and all examples, or exemplary language (e.g., "such as") provided herein is intended to illuminate the invention and does not pose a limitation on the scope of the invention unless otherwise claimed. No language in the specification should be construed as indicating any non-claimed element as essential to the practice of the invention.

Preferred embodiments of this invention are described herein. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A pressure control valve for controlling two pressure load paths, the pressure control valve comprising:
a housing defining a single primary input pressure path, a first load path, and a second load path, the housing including a cavity therein;
a spool, the spool slidably disposed in the cavity of the housing; and
a dual proportional actuator including a movable plunger, the plunger in operative engagement with the spool, the actuator selectively operable to move the spool via the plunger in a first direction or a second direction, the actuator operable to dispose the spool in a neutral position wherein the first and second load paths are blocked, a first control position wherein the first load path is open and the second load path is blocked, and a second position wherein the second load path is open and the first load path is blocked.

2. The valve according to claim 1 wherein the housing defines a primary pressure port in communication with the primary pressure path, first and second load ports, and first and second tank ports, the first load port being selectively connected to the primary pressure port via the first load path, the second load port selectively connected to the primary pressure port via the second load path, and the first and second load ports being respectively selectively connected to the first and second tank ports via first and second drain paths.

3. The valve according to claim 2 wherein moving the spool in the first direction a predetermined distance from a neutral position blocks communication between the second tank port and the second load port and maintains the connection of the first tank port and the first load port, and moving the spool in the second direction a predetermined distance from a neutral position blocks communication between the first tank port and the first load port and maintains the connection of the second tank port and the second load port.

4. The valve according to claim 3 wherein the spool includes a plurality of lands, the lands configured such that a first secondary pressure develops at the first load port when the communication between the first tank port and the first load port is blocked and such that a second secondary pressure develops at the second load port when the communication between the second tank port and the second load port is blocked.

5. The valve according to claim 4 wherein the spool includes a plurality of lands configured to isolate the primary pressure path.

6. The valve according to claim 4 wherein the spool includes a plurality of lands, at least two of which have different diameters, the spool lands of different diameters defining an area which is exposed to the first secondary pressure to thereby generate a feedback force which acts against a drive force.

7. The valve according to claim 6 wherein the spool includes at least three lands, the spool lands of different diameters defining an area which is exposed to the first and second secondary pressures to thereby generate a respective feedback force which acts against a respective drive force.

8. The valve according to claim 1 wherein the spool includes a plurality of lands configured to isolate the primary pressure path.

9. The valve according to claim 1 wherein when the actuator is operated an electromagnetic field is generated, and when the spool is in either of the first and second positions, a pressure differential develops within the spool, the spool being configured such that it moves in response to the difference between the differential pressure and the magnetic field of the actuator.

10. The valve according to claim 2 wherein the spool includes a differential area associated with each load port, each differential are being exposed to the pressure in the load port.

11. The valve according to claim 10 wherein when the actuator is operated an electromagnetic field is generated, and when the spool is in either of the first and second positions, a pressure differential develops within the spool, the spool being configured such that it moves in response to the difference between the differential pressure and the magnetic field of the actuator.

12. The valve according to claim 1 wherein the dual proportional actuator comprises a pair of solenoid coils.

13. The valve according to claim 1 wherein the plunger of the dual proportional actuator includes a push pin connected to the spool.

14. The valve according to claim 1 further comprising:
a cage disposed in the cavity of the housing, the cage fixed with respect to the housing, the spool slidably disposed within the cage.

15. The valve according to claim 1 further comprising:
a spring engaged with the plunger and the spool, the spring acting to bias the plunger and the spool to a neutral position.

16. The valve according to claim 4 further comprising:
a sliding pin disposed inside the spool;
a stop pin configured to be engageable with the sliding pin;
wherein the secondary pressure developed when the communication between the first load port and first tank port is blocked acts on the sliding pin to generate two opposing forces, one of which acts on the spool to stabilize the secondary pressure at the first load port, and the other of which acts on the sliding pin to move the sliding pin against the stop pin.

17. A pressure control valve for controlling two pressure load paths, the pressure control valve comprising:
a housing defining a single primary pressure path and at least one port, the housing including a cavity therein;
a cage disposed in the cavity of the housing, the cage fixed with respect to the housing;
a spool, the spool slidably disposed within the cage, the spool includes a plurality of lands configured to isolate the primary pressure path;
a dual proportional actuator including a movable plunger, the plunger in operative engagement with the spool, the actuator selectively operable to move the spool via the plunger in a first direction or a second direction;
a spring engaged with the plunger and the spool, the spring acting to bias the plunger and the spool to a neutral position;
wherein moving the spool in the first direction a predetermined distance from a neutral position blocks communication between the second tank port and the second load port and maintains the connection of the first tank port and the first load port, and moving the spool in the second direction a predetermined distance from a neutral position blocks communication between the first tank port and the first load port and maintains the connection of the second tank port and the second load port.
